# EUROPÄISCHE PATENTSCHRIFT

(11) **EP 2 060 831 B1**
(45) Veröffentlichungstag und Bekanntmachung des Hinweises auf die Patenterteilung: **11.08.2010**
(21) Anmeldenummer: 07022431.6
(22) Anmeldetag: 19.11.2007
(51) Int. Cl.: F16H 63/18, F16H 63/16

(54) **Sequentielle Schaltvorrichtung**
Sequential switching device
Dispositif de commutation séquentiel

(43) Veröffentlichungstag der Anmeldung: 20.05.2009
(73) Patentinhaber: Hoerbiger Antriebstechnik GmbH, 86956 Schongau (DE)
(72) Erfinder: Fürguth, Werner, 87640 Biessenhofen/Altdorf (DE)
(74) Vertreter: Kitzhofer, Thomas

(56) Entgegenhaltungen:
- DE-A1- 19 627 980
- US-A1- 2004 060 381
- US-A1- 2005 160 848
- US-B1- 6 308 797

## Beschreibung

Die Erfindung betrifft eine sequentielle Schaltvorrichtung für Handschaltgetriebe gemäß dem Oberbegriff des Anspruches 1, und wie sie aus der US20040060381A bekannt ist.

Sequentielle Schaltungen sind vor allem bei Motorrädern und im KFZ-Rennsport im Einsatz. Aus technischen Gründen beschränkt sich der Einsatz von sequentiellen Schaltungen vor allem auf unsynchronisierte Getriebe. Bei Serienfahrzeugen existieren sequentielle Schaltungen praktisch nur in Verbindung mit elektrischen Aktuatoren oder automatischen Getrieben.

Ein Getriebe mit sieben Vorwärtsgängen und einem Rückwärtsgang stellt derzeit das obere Ende der manuellen Schaltgetriebe dar. Die horizontale Bewegung für das Wählen der Gasse gestaltet sich dadurch immer breiter, so dass eine sequentielle Schaltung wünschenswert wäre. Allerdings ist die Umrüstung eines manuell schaltbaren Getriebes mit einer herkömmlichen H-Schaltung auf eine mechanische sequentielle Schaltung technisch äußerst schwierig. Denn bei einer normalen H-Schaltung wird in der Regel für die Gassenwahl und für die Gangwahl je ein Schaltzug bzw. ein Gestänge eingesetzt. Bei einer sequentiellen Ausführung würde die nötige Bewegung für die Gassenwahl jedoch fehlen.

Es ist daher Aufgabe der vorliegenden Erfindung, eine sequentielle Schaltvorrichtung für Handschaltgetriebe zu schaffen, die es möglich macht, eine rein mechanische, sequentielle Schaltung bei Schaltgetrieben mit herkömmlicher H-Schaltung möglich zu machen.

Die Lösung dieser Aufgabe erfolgt durch die Merkmale des Anspruches 1.

Dadurch wird es möglich, eine Kombination aus einer Klauenschaltung und einer Kurvensteuerung vorzugsweise in einer separaten Schaltbox zu integrieren. Der Schaltzug vom Schalthebel kommend ist mit einer Schaltklaue bzw. einem Klauenfinger verbunden. Dieser schiebt bzw. zieht die Schaltklaue beim Vorwärts- oder Rückwärtsschalten in eine andere Position. Über Mitnehmerstifte wird dadurch eine Achse in eine definierte Position gedreht. Auf der Achse befinden sich Kurvenscheiben für Wähl- und Schaltbewegung, die über Stößelstangen und/oder Schaltzüge oder Gestänge mit der Schalteinheit am Fahrzeuggetriebe verbunden sind.

Vorzugsweise wird somit eine rein mechanische, sequentielle Schaltung bei H-Schaltgetrieben möglich gemacht. Hierdurch ist es vorteilhafterweise möglich, die sportliche Charakteristik einer sequentiellen Schaltung auch bei Fahrzeugtypen zu realisieren, die nicht nur für den Rennsport oder im Motorradbereich vorgesehen sind.

Ferner ergibt sich der Vorteil, dass mehr Freiraum bei der Gestaltung der Mittelkonsole erreichbar ist.

Insgesamt ist es mit der sequentiellen Schaltvorrichtung gemäß der vorliegenden Erfindung möglich, den Gangwechsel am Schalthebel sequentiell auszuführen, wobei der Gangwechsel im Getriebe über Wähl- und Schaltbewegungen ausgeführt wird. Der Schalthebel kann hierbei nur Vorwärts- bzw. Rückwärtsbewegungen für die geraden und ungeraden Gänge ausführen.

Die erfindungsgemäße Schaltvorrichtung kann ferner als separate Box ausgeführt werden, die zwischen dem Schalthebel und dem Schaltdom am Getriebe angeordnet werden kann.

Ferner ist es möglich, die Schaltvorrichtung gemäß der vorliegenden Erfindung direkt unter dem Schalthebel anzubringen.

Bei einer weiteren Alternative ist es möglich, die erfindungsgemäße Schaltvorrichtung in das Fahrzeuggetriebe zu integrieren.

Bei einer besonders einfachen Ausführungsform erfolgt der Schaltbefehl über eine Schaltklaue die wiederum den Schaltbefehl über Kurvenscheiben an den Schaltdom weitergeleitet.

Die Unteransprüche haben vorteilhafte Weiterbildungen der Erfindung zum Inhalt.

Weitere Einzelheiten, Vorteile und Merkmale der vorliegenden Erfindung ergeben sich aus nachfolgender Beschreibung einer Ausführungsform anhand der Zeichnung. Es zeigt:
- Fig. 1: eine schematisch stark vereinfachte Seitenansicht einer erfindungsgemäßen Schaltvorrichtung,
- Fig. 2: eine Schnittdarstellung der Schaltvorrichtung gemäß Fig. 1,
- Fig. 3: eine Schnittdarstellung der Schaltvorrichtung gemäß Fig. 2 entlang der Linie A-A in Fig. 2,
- Fig. 4: eine Schnittdarstellung der erfindungsgemäßen Schaltvorrichtung entlang der Linie B-B in Fig. 2, und
- Fig. 5: eine weitere Schnittdarstellung der Schaltvorrichtung gemäß Fig. 1.

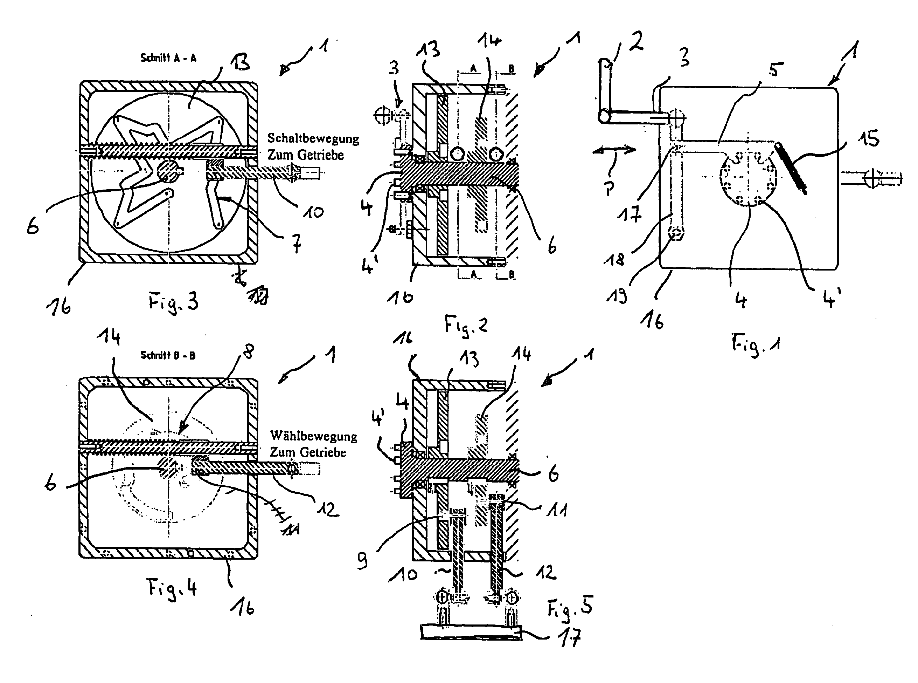

Wie die Zusammenschau der Fig. 1-5 verdeutlicht, stellen diese schematisch vereinfachte Darstellungen zur Erläuterung des Aufbaues der erfindungsgemäßen Schaltvorrichtung 1 für ein Handschaltgetriebe dar, das in Fig. 5 durch den Block 16 symbolisiert ist.

Die sequentielle Schaltvorrichtung 1 gemäß vorliegender Erfindung weist einen Schalthebel 2 auf, der über eine im Beispielsfalle als Gestänge ausgeführte Übertragungseinrichtung 3 mit einer Stiftwalze 4 verbunden ist, wobei an der Übertragungseinrichtung 3 ein Klemmfinger 5 angebracht ist, dessen freies Ende mit einer in der Schaltvorrichtung 1 angeordneten Zug-/Druckfeder verbunden ist.

Die Stiftwalze 4 ist über eine in den Fig. 2 und 5 sichtbare Welle 6 im Gehäuse 16 der Schaltvorrichtung 1 gelagert und weist im Beispielsfalle acht Stifte auf, von denen einer in den Figuren mit der Bezugsziffer 4' repräsentativ für sämtliche Stifte gekennzeichnet ist.

Wie Fig. 1 verdeutlicht, ist der Klauenfinger 5 über ein Gelenk 17 mit einer über ein Gelenk 19 gelagerten Stange 18 der übertragungseinrichtung 3 verbunden.

Mit Hilfe des Schalthebels 2 kann eine sequentielle Schaltbewegung, also eine Schaltbewegung, die nur eine Vorwärts- oder Rückwärtsbewegung durchführt, entsprechend dem Pfeil in Fig. 1 durchgeführt werden.

Die Welle 6 ist bei der dargestellten Ausführungsform mit einer ersten Kurvenanordnung 7 sowie einer zweiten Kurvenanordnung 8 versehen, die bei der in den Fig. 1-5 dargestellten Ausführungsform auf einer ersten Scheibe 13 bzw. einer zweiten Scheibe 14 angeordnet sind. Alternativ hierzu ist es möglich, lediglich eine derartige Scheibe vorzusehen, auf deren beiden gegenüberliegenden Seiten dann die beiden Kurvenanordnungen 7, 8 angeordnet sind.

Die Kurvenanordnung 7 ist insbesondere aus der Darstellung der Fig. 3 ersichtlich, wobei explizit auf die Lage und den Verlauf der Kurvenanordnung 7 auf die dortige zeichnerische Darstellung verwiesen wird. In der Kurvenanordnung 7, die für die Gangwahl vorgesehen ist, ist eine Abwälzeinrichtung 9 (siehe Fig. 5) angeordnet, die mit einem ersten Stößel 10 versehen ist, der längsbeweglich im Gehäuse 16 gelagert ist, wie sich dies aus den Fig. 3 und 5 ergibt.

Somit führt die erste Kurvenanordnung die erste Abwälzeinrichtung 9, die über den ersten Stößel 10 mit dem Getriebe 17 in Wirkverbindung steht, um den Gangwechsel ausführen zu können.

Aus Fig. 4 ist die zweite Kurvenanordnung 9 ersichtlich, die gemäß Fig. 5 eine zweite Abwälzeinrichtung 11 führt, die mit einem linear im Gehäuse 16 geführten zweiten Stößel 12 verbunden ist, der mit dem Getriebe 17 in Wirkverbindung steht.

Durch die zweite Kurvenanordnung 8, bezüglich deren Ausgestaltung hiermit explizit auf die zeichnerische Darstellung in Fig. 4 verwiesen wird, ist die Gassenwahl beim Schalten vorzunehmen.

Neben der voranstehenden schriftlichen Offenbarung der Erfindung wird hiermit nochmals explizit auf deren zeichnerische Darstellung in den Fig. 1-5 Bezug genommen.

### Bezugszeichenliste

- 1: Sequentielle Schaltvorrichtung
- 2: Schalthebel
- 3: Übertragungseinrichtung
- 4: Stiftwalze
- 4': Stifte
- 5: Klauenfinger
- 6: Welle
- 7: Erste Kurvenanordnung
- 8: Zweite Kurvenanordnung
- 9: Erste Abwälzeinrichtung
- 10: Erster Stößel
- 11: Zweite Abwälzeinrichung
- 12: Zweiter Stößel

## Patentansprüche

1. Sequentielle Schaltvorrichtung (1) für Handschaltgetriebe (17)
- mit einem Schalthebel (2),
- mit einer Übertragungseinrichtung (3), die den Schalthebel (2) mit einer Stiftwalze (4) über einen Klemmfinger (5) verbindet,
**dadurch gekennzeichnet,**
- **dass** die Stiftwalze (4) eine Welle (6) aufweist, auf der eine erste Kurvenanordnung (7) für die Gangwahl und eine zweite Kurvenanordnung (8) für die Gassenwahl angeordnet ist,
- wobei die erste Kurvenanordnung (7) eine Abwälzeinrichtung (9) führt, die mit einem linear beweglich geführten ersten Stößel (10) verbunden ist, der mit dem Getriebe (17) zum Gangwechsel in Wirkverbindung steht, und
- wobei die zweite Kurvenanordnung (8) eine Abwälzeinrichtung (11) führt, die mit einem linear geführten zweiten Stößel (12) verbunden ist, der mit dem Getriebe (17) zur Gassenwahl in Wirkverbindung steht.

2. Schaltvorrichtung nach Anspruch 1, **dadurch gekennzeichnet, dass** die Kurvenanordnung (7, 8) auf gegenüberliegenden Seiten einer Kurvenscheibe angeordnet ist, die auf der Welle (6) fixiert ist.

3. Schaltvorrichtung nach Anspruch 1, **dadurch gekennzeichnet, dass** die erste Kurvenanordnung (7) auf einer ersten Scheibe (13) und die zweite Kurvenanordnung (8) auf einer zweiten Scheiben (14) angeordnet ist, wobei beide Scheiben (13, 14) auf der Welle (6) fixiert sind.

4. Schaltvorrichtung nach einem der Ansprüche 1 bis 3, **dadurch gekennzeichnet, dass** die Stiftwalze (4) über die Welle (6) in einem Gehäuse (16) gelagert ist.

5. Schaltvorrichtung nach einem der Ansprüche 1 bis 4, **dadurch gekennzeichnet, dass** der erste Stößel (10) und der zweite Stößel (12) linear beweglich im Gehäuse (16) geführt sind.

## Claims

1. A sequential gearshift device (1) for a manual gearbox (17), comprising
- a gearshift lever (2),
- a transmission means (3) which connects the gearshift lever (2) with a pin roller (4) by means of a clamping finger (5),
**characterized in that**
- the pin roller (4) includes a shaft (6) having arranged thereon a first cam arrangement (7) for gear selection and a second cam arrangement (8) for gate selection,
- the first cam arrangement (7) guiding a rolling means (9) connected with a linearly movably guided first cam follower (10) which is operatively connected with the gearbox (17) for gear shifting, and
- the second cam arrangement (8) guiding a rolling means (11) connected with a linearly guided second cam follower (12) which is operatively connected with the gearbox (17) for gate selection.

2. The gearshift device according to claim 1, **characterized in that** the cam arrangement (7, 8) is arranged on opposite sides of a cam disk which is fixed on the shaft (6).

3. The gearshift device according to claim 1, **characterized in that** the first cam arrangement (7) is arranged on a first disk (13) and the second cam arrangement (8) is arranged on a second disk (14), both disks (13, 14) being fixed on the shaft (6).

4. The gearshift device according to any of claims 1 to 3, **characterized in that** the pin roller (4) is mounted in a housing (16) by means of the shaft (6).

5. The gearshift device according to any of claims 1 to 4, **characterized in that** the first cam follower (10) and the second cam follower (12) are linearly movably guided in the housing (16).

## Revendications

1. Dispositif de changement de vitesse séquentiel (1) pour boîte de vitesses manuelle (17), comportant
- un levier de changement de vitesse (2),
- un moyen de transmission (3) reliant le levier de changement de vitesse (2) à un cylindre à goupilles (4) par l'intermédiaire d'un doigt de serrage (5), **caractérisé en ce que**
- le cylindre à goupilles (4) présente un arbre (6) sur lequel sont agencés un premier agencement de cames (7) pour la sélection de la vitesse et un deuxième agencement de cames (8) pour la sélection de la voie,
- le premier agencement de cames (7) guidant un moyen de roulement (9) relié à un premier poussoir (10) qui est guidé de manière à être mobile de façon linéaire et qui est en liaison fonctionnelle avec la boîte de vitesses (17) pour le changement de vitesse, et
- le deuxième agencement de cames (8) guidant un moyen de roulement (11) relié à un deuxième poussoir (12) qui est guidé de manière à être mobile de façon linéaire et qui est en liaison fonctionnelle avec la boîte de vitesses (17) pour la sélection de la voie.

2. Dispositif de changement de vitesse selon la revendication 1, **caractérisé en ce que** l'agencement de cames (7, 8) est agencé sur des côtés opposés d'un disque à cames fixé à l'arbre (6).

3. Dispositif de changement de vitesse selon la revendication 1, **caractérisé en ce que** le premier agencement de cames (7) est agencé sur un premier disque (13) et le deuxième agencement de cames (8) est agencé sur un deuxième disque (14), les deux disques (13, 14) étant fixés à l'arbre (6).

4. Dispositif de changement de vitesse selon l'une des revendications 1 à 3, **caractérisé en ce que** le cylindre à goupilles (4) est monté dans un boîtier (16) au moyen de l'arbre (6).

5. Dispositif de changement de vitesse selon l'une des revendications 1 à 4, **caractérisé en ce que** le premier poussoir (10) et le deuxième poussoir (12) sont guidés dans le boîtier (16) de manière à être mobiles de façon linéaire.
